# EUROPEAN PATENT SPECIFICATION

(11) **EP 1 942 630 B1**
(45) Date of publication and mention of the grant of the patent: **25.11.2009**
(21) Application number: 07290016.0
(22) Date of filing: 05.01.2007
(51) Int. Cl.: H04L 29/06, H04L 29/12

(54) **Selection of mobility management protocols**
Auswahl von Mobilitätsverwaltungsprotokollen
Sélection de protocoles de gestion de mobilité

(43) Date of publication of application: 09.07.2008
(73) Proprietor: Alcatel Lucent, 75008 Paris (FR)
(72) Inventor: De Juan Huarte, Frederico, 75014 Paris (FR); Conte, Alberto, 75014 Paris (FR); Gomez Vinagre, Ignacio, 2000 Antwerpen (BE); Leroy, Suresh, 2340 Vlimmeren (BE)
(74) Representative: Schmidt, Werner Karl

(56) References cited:
- JYH-CHENG CHEN ET AL: "RAMP: reconfigurable architecture and mobility platform" GLOBAL TELECOMMUNICATIONS CONFERENCE, 2005. GLOBECOM '05. IEEE ST. LOIUS, MO, USA 28 NOV.-2 DEC. 2005, PISCATAWAY, NJ, USA,IEEE, 28 November 2005 (2005-11-28), pages 3564-3569, XP010882302 ISBN: 0-7803-9414-3
- PERKINS C ET AL: "IP Mobility Support for IPv4" IETF STANDARD, INTERNET ENGINEERING TASK FORCE, IETF, CH, August 2002 (2002-08), XP015009105 ISSN: 0000-0003
- GUNDAVELLI K LEUNG CISCO SYSTEMS S: "Localized Mobility Management using Proxy Mobile IPv6" IETF STANDARD-WORKING-DRAFT, INTERNET ENGINEERING TASK FORCE, IETF, CH, 8 November 2005 (2005-11-08), XP015042203 ISSN: 0000-0004

## Description

### Field of the invention

The invention relates to a method of configuring a connection of a mobile terminal to an internet protocol network in general and to a method of configuring a connection of a mobile internet terminal to an internet protocol network by use of DHCP in particular. In other aspects the invention relates to a computer program product adapted to perform basic steps of the method in accordance with the invention, to a mobile terminal, to an internet protocol network, and to a network component of the internet protocol network.

### Background and related art

The mobile internet protocol standard, also referred to as mobile-IP or as MIP, is an internet engineering taskforce (IETF) standard communications protocol that is designed to allow mobile devices to move from one network to another network while maintaining their permanent IP address. Mobile-IP for IPv4 is described in IETF RFC 3344 and RFC 2002, MIP for IPv6 is described in IETF RFC 3775.

In the mobile internet protocol standard, a mobile device is referred to as mobile node (MN). A mobile node is a node in an IP network that is able to change its access point to the internet by use of mobile-IP. A mobile node keeps always his IP address which is also referred to as primary address. A mobile node must not necessarily be a laptop or a mobile station. A mobile node can also be, e.g., an IP router or gateway onboard of an aeroplane.

The home network of a mobile node is the sub-network to which the mobile node is associated with according to his primary IP address. A foreign network (also called visited network) is the actual sub-network in which the mobile node resides when the mobile node is not in the home network. In the foreign network, mobile-IP support of the mobile node is required. If present, a foreign agent of a foreign network provides services to a mobile node, when the mobile node is located in the corresponding foreign network. In view of the internet protocol, the so called care of address (CoA) specifies the actual location of the mobile node. Thus, the mobile node is addressable in the foreign network by its care of address which is given by the foreign agent in the foreign network to the mobile node. The care of address is therefore also sometimes referred to as secondary IP address.

The above mentioned care of address can be hosted by the foreign agent. The care of address is then an IP address of the foreign agent. The care of address can also be hosted by the mobile node itself. The care of address is then an IP address of the mobile node. When the care of address is hosted directly by the mobile node, then the care of address is also referred to as co-located care of address as the care of address is 'co-located' with the primary IP address on the mobile node. The location in the network, where the care of address is located, is also referred to as point of attachment of the mobile node.

A home agent of the home network also provides services to the mobile node. The home agent maintains a database wherein the care of addresses of the associated mobile nodes are kept (mobility binding). The home agent therefore keeps track of the mobile nodes and forwards data packets to them by use of the corresponding care of address.

A correspondent node sends data packets (also referred to as IP-datagrams) to the primary IP address of the mobile node. The data packets are received by the home agent of the mobile node. The home agent is therefore usually located on a router of the home network. The home agent is able to identify by use of the above mentioned database the care of address of the mobile node. The data packets are tunnelled from the home agent to the point of attachment of the mobile node. When the foreign agent hosts the care of address, the end point of the tunnel corresponds to the foreign agent. When the care of address is co-located, the end point of the tunnel is represented by the mobile node. From a logical point of view, a tunnel is a channel for data packets between the tunnel starting point and the tunnel end point.

When the mobile node enters the access network, the care of address has to be provided to the mobile node, if the mobile node shall host the care of address. Furthermore other configuration data have to be provided to the mobile node in order to enable communication to the mobile node via mobile-IP. The dynamic host configuration protocol (DHCP) is frequently employed in order to configure the mobile terminal. The phase during which the mobile terminal is configured by the network is referred to as configuration phase.

In its origins, mobile-IP has been developed with the focus on unmanaged network models. Nowadays, the protocol is starting to be widely deployed and used in public operated networks which are managed by private telecom operators. In order to better address managed networks modern architectures for mobile systems introduce the concept of network based mobility, e.g. a proxy MIP client in the network. This concept basically consists in providing mobility support as network services completely transparent to the terminal, since there is no requirement for a MIP client in the terminal. During the configuration phase of the terminal, the network is however not aware if the mobile terminal is able to support a MIP client. Furthermore, during the configuration phase, the mobile terminal is not aware, if the network supports a MIP client in the terminal or a proxy MIP client in the network or even both mobility models/modes.

Jyh-Cheng Chen et al describe in 'RAMP: Reconfigurable Architecture and Mobility Platform', Global Telecommunications Conference, 2005. GLOBECOM '05.IEEE St Louis, MO, USA 28 November to 2 December 2005, Piscataway, NJ, USA, IEEE 28 November 2005, pages 3564-3569, ISBN: 0780394143 a method of configuring a connection of a mobile terminal to an internet protocol network. A first message is received in form of a RAMP registration request by the IP network from the mobile terminal. The first message indicates whether the mobile terminal is able to employ an IP-based mobility protocol client for the connection. Furthermore, a second message is sent in form of a RAMP advertisement to the mobile terminal by the network. The second message indicates the mobility modes supported by the IP network.

Perkins et al describe in 'IP Mobility Support for IPv4', IETF Standard, Internet Engineering Taskforce, IETF, CH, August 2002 a method of configuring a connection of a mobile terminal to an internet protocol network. The method comprises the step of receiving a first message from the mobile terminal by the network. The first message relates to a mobile IP register request and indicates that the mobile terminal is able to employ a mobile IP client. The network sends a second message corresponding to a registration reply message that indicates that the following mobility modes are supported by the network: code 0: mobile IP with simultaneous bindings, code 1: mobile IP without simultaneous bindings.

Gundavelli K Leung describes in Cisco Systems: 'Localized Mobility Management Using Proxy Mobile lPv6', IETF Standard-Working-Draft, Internet Engineering Taskforce, IETF, CH, 8 November 2005, ISSN: 0000-0004 a local mobility management model in an lPv6-based network using proxy mobile IPv6 support. According to this model, a mobile station roaming in an MIPv6 network is not involved in any mobility related signaling. As a mobility proxy agent serves the mobile station with regards to these aspects.

There is a need for an improved method of configuring a connection of a mobile terminal to an internet protocol network. There is also a need for an improved internet protocol network that allows for the configuration of a connection of a mobile terminal to an internet protocol, and for a network component of an internet protocol which allows for the configuration of a connection of a mobile terminal.

### Summary of the invention

In one aspect of the invention, there is provided a method of configuring a connection of a mobile terminal to an internet protocol (IP) network as specified in claim 1. The method comprises the step of receiving a first message from the mobile terminal, wherein the first message indicates whether the mobile terminal is able to employ an IP-based mobility protocol client, such as a mobile IP (MIP) client, for the connection. In a next step, a second message is sent to the mobile terminal, wherein the second message indicates the mobility modes supported by the network. The network instructs the mobile terminal which shall be the selected mobility mode. The mobility modes or models refer to the usage of a proxy MIP client in the network or to the usage of a MIP-client on the mobile terminal.

The first message is received by the network. The mobile terminal indicates by use of the first message whether it is adapted to employ the mobility protocol client for the connection that is to be established to the IP network. The IP network therefore obtains information about the possibility of the mobile terminal to use the mobility protocol client. The IP network can then decide if it wants the mobile terminal to establish the mobility protocol client or if it wants to use a proxy mobility protocol client in the network, such as a proxy MIP client, for the connection. A second message is then sent to the mobile terminal which indicates to the mobile terminal whether or not it shall instantiate the mobility protocol client for the connection.

The method in accordance with the invention is particularly advantageous as the IP network obtains, e.g., during the configuration phase of the mobile station, information about the capability of the mobile terminal to instantiate and to use the mobility protocol client. The IP network can then make the decision and instruct the mobile terminal whether to instantiate the mobility protocol client. This ensures a smooth transition from a mobility model/mobility mode that is centered in the mobile terminal (when the mobile terminal uses the mobility protocol client) to one centered in the network (when the proxy mobility protocol client is used) which is much more appropriate for managed networks and services.

In accordance with an embodiment of the invention, the proxy mobility protocol client is a proxy MIP and the mobility protocol client is a MIP client. The method in accordance with the invention is however by no means restricted to MIP as other mobility management protocols such as netlmm (see for example http://www.ietf.org/html.charters/netlmm-charter.html) are currently discussed.

In accordance with an embodiment of the invention, the first message and the second message are sent and received during the configuration phase of the connection between the mobile terminal and the IP network. This has the advantage that the network can control the selection of the mobility model/modes before the connection between the network and the terminal is fully established.

In accordance with the invention, the method further comprises the step of instantiating an IP-based mobility server, e.g. the home agent acting as MIP server, on the IP network. The mobility server serves the mobility protocol client, e.g. a MIP client. Moreover, the method in accordance with the invention comprises the step of instantiating an IP-based proxy mobility protocol client, e.g. a Proxy MIP client, on the network if indicated by the second message that the mobile terminal shall not instantiate the mobility protocol client, wherein the proxy mobility protocol client links the mobile terminal to the mobility server. The decision whether the proxy mobility protocol client or the mobility protocol client is to be employed for a connection to the mobile terminal is therefore made by the network. This is particularly advantageous as full control over the network is given to the network operator with respect to the selection of the mobility mode to be used for communication with the mobile terminal.

In accordance with an embodiment of the invention, the network comprises a home network and a foreign network. The mobile terminal is associated with the home network, wherein the foreign network comprises a DHCP agent (relay) which connects to a DHCP server. The DHCP server may be located in the foreign or in the home network. The second message is sent from the DHCP server via the DHCP agent to the mobile terminal. The first message is sent from the mobile terminal via the DHCP agent to the DHCP server. As mentioned already in the introductory part, the configuration of the mobile terminal can be carried out by use of DHCP. The mobile terminal sends a DHCP DISCOVER message to the network when it is for the first time connecting to the foreign network. The DHCP DISCOVER message is received by the DHCP agent and further transferred from the agent to the DHCP server. Thus, the components that take at first notice about the presence of the mobile terminal are the DHCP relay and server. It is therefore advantageous when the first message is received and the second message is provided by the DHCP server or alternatively, by the DHCP relay.

In accordance with an embodiment of the invention, the second message comprises first configuration data, wherein the first configuration data comprises a first tag, wherein the first tag indicates that the configuration data has been provided by the home network, wherein the second message further comprises second configuration data provided by the foreign network, wherein the second configuration data comprises a second tag, wherein the second tag indicates that the second configuration data has been provided by the foreign network. The DHCP server can be located in the home network and can therefore provide the first configuration data with the added first tag to the DHCP agent. The DHCP agent adds the second configuration data along with the second tag and transfers the first and second configuration data to the mobile terminal. Alternatively, the DHCP server can be located in the foreign network. The first configuration data is then requested by the DHCP server from a server in the home network, for example from an AAA (authentication, authorization and accounting) server by use of the AAA-protocol.

In accordance with an embodiment of the invention, the second message corresponds to a DHCP OFFER or to a DHCP ACK message. According to DHCP, the DHCP server sends a DHCP OFFER message after reception of the DHCP DISCOVER message and further a DHCP ACK message after reception of a DHCP REQUEST which is sent from the mobile terminal after reception of the DHCP OFFER message. THE DHCP OFFER message or the DHCP ACK message can be used to transfer the indication whether the mobile terminal shall employ the MIP client to the mobile terminal. Further, first and second tags can be added to the DHCP OFFER or DHCP ACK message indicating whether the configuration data have been provided by the home network or by the foreign network.

The usage of the first and second tags is particularly advantageous in the DHCP OFFER message as the network sends configuration data to the mobile terminal according to DHCP via the DHCP OFFER message. The first configuration data comprises a first tag by which it is indicated that the first configuration data has been provided by the DHCP server. Thus, the mobile terminal is able to relate the first configuration data to remote services offered by the home network. Similarly, the DHCP OFFER message is passed to the DHCP relay which adds a second tag to the second configuration data that the DHCP relay adds to the DHCP response message. The mobile terminal is then able to identify by use of the second tag that the second configuration data has been provided by the foreign network. The mobile terminal can then use the first configuration data in order to request a remote service from the home network or the second configuration data in order to request a local service from the foreign network.

In accordance with the invention, the second message further indicates whether the mobile terminal shall employ the mobility protocol client or not, and wherein the mobile terminal instantiates the mobility protocol client on the terminal if indicated by the second message. This provides the advantage that the network can instruct the mobile terminal to use the mobility protocol client or, alternatively, can decide to employ a proxy mobility protocol client on the network for further communication with the terminal. This is particularly advantageous as network operators have full control over the mobility mode used for the communication with the mobile terminal.

In accordance with an embodiment of the invention, the mobile terminal is configured by the IP network by use of the dynamic host configuration protocol (DHCP), wherein the first message corresponds to a DHCP DISCOVER message or to a DHCP REQUEST message. The mobile terminal sends when connecting to the network a DHCP DISCOVER message. The DHCP DISCOVER message can in accordance with the method in accordance with the invention comprise the indication of the ability of the mobile terminal to use the mobility client. The network can then respond by use of the DHCP OFFER message whether the mobility client shall be used or not. Alternatively, the mobile terminal sends a DHCP REQUEST message after reception of the DHCP OFFER message.

In a second aspect, the invention relates to computer program product as defined in claim 3. which comprise computer executable instructions. The instructions are adapt to perform the above described methods in accordance with the invention.

In accordance with an embodiment of the invention, the IP network corresponds to a home network or a foreign network, wherein the home network is associated with the mobile terminal, and wherein the foreign network provides a link between the home network and the mobile terminal.

In a third aspect, the invention relates to a network component of an IP network as specified in claim 4. The network component comprises means for receiving a first message from a mobile terminal, wherein the first message indicates whether the mobile terminal is able to employ an IP-based mobility protocol client for a connection to the IP network. The component further comprises means for sending a second message to the mobile terminal, wherein the second message indicates the mobility modes supported by the IP network and optionally whether the mobile terminal shall employ the IP-based mobility protocol client for the connection if the ability to use the mobility protocol client has been indicated in the first message by the mobile terminal.

In accordance with an embodiment of the invention, the network component corresponds to a DHCP server or to a DHCP relay, wherein the first message corresponds to a DHCP DISCOVER message received by the DHCP server and/or the DHCP relay, wherein the second message corresponds to a DHCP OFFER message sent by the DHCP server via the DHCP relay to the mobile terminal, wherein the DHCP server further provides first configuration data to the mobile terminal by use of the second message, wherein the DHCP server further comprises means for adding a first tag to the first configuration data, wherein the first tag specifies the location of the DHCP server in the IP network, wherein the DHCP relay comprises means for receiving the second message from the DHCP server, wherein the DHCP relay further provides second configuration data to the mobile terminal by use of the DHCP response message, wherein the DHCP relay further comprises means for adding a second tag to the second configuration data.

The aspects of the invention described above will become even more apparent from and elucidated with reference to the embodiments described hereinafter.

### Brief description of the drawings

In the following preferred embodiments of the invention will be described in greater detail by way of example only making reference to the drawings in which:
- Figure 1: shows a block diagram of an IP network,
- Figure 2: shows a flow diagram illustrating basic steps performed by a method in accordance with the invention, and
- Figure 3: shows another flow diagram illustrating basic steps performed by a method in accordance with the invention.

### Detailed description

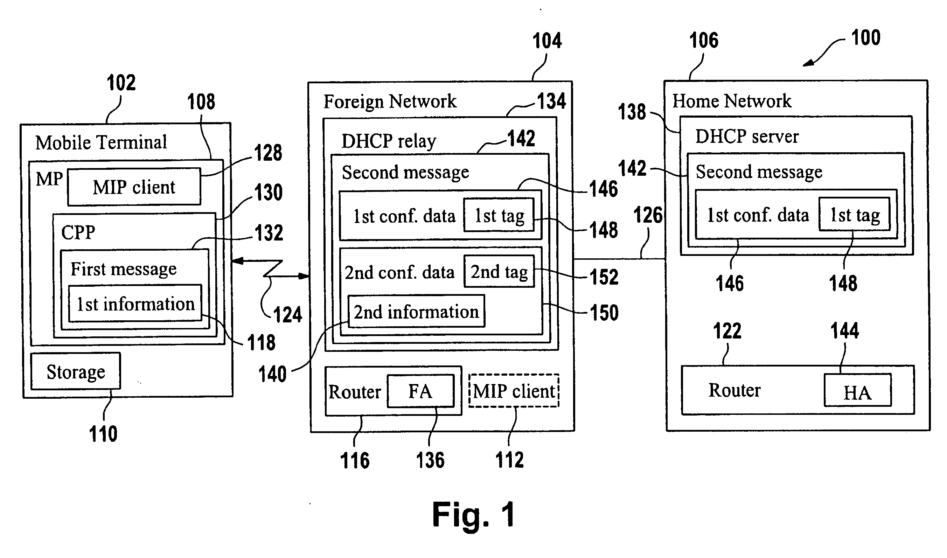

Fig. 1 shows a block diagram of an IP network 100. The IP network 100 comprises a foreign network 104 and a home network 106. The foreign network 104 comprises a DHCP relay 134 and a router 116. The home network 106 comprises a DHCP server 138 and a router 122. The routers 116 and 122 connect the networks 104, 106 via connection 126 with each other. The connection 126 is for example a connection over the internet. The router 116 of the foreign network 104 hosts a foreign agent 136 and the router 122 of the home network 106 hosts a home agent 144.

The IP network 100 can further be linked with a mobile terminal 102. The mobile terminal 102 comprises a microprocessor 108 and a storage device 110. The mobile terminal 102 is able to run a MIP client 128 on the microprocessor 108. The mobile terminal 102 connects via a connection 124 to the foreign network 104. The connection 124 can be a wireless or a wired network connection.

The mobile terminal 102 is from an IP point of view associated with the home network 106 as its primary IP address relates to the home network 106. When the mobile terminal 102 resides outside the area covered by the home network 106, at a location covered by the foreign network 104, the mobile terminal 102 might however become integrated into the network 100 by use of MIP.

When the mobile terminal 102 connects for the first time via the connection 124 to the foreign network 104, the mobile terminal 102 is not configured yet from a mobile-IP point of view. The mobile terminal 102 is configured by use of DHCP and the DHCP relay 134 and DHCP server 138 are used to provide DHCP services to the mobile terminal 102.

The microprocessor 108 executes a computer program product 130 which is stored permanently on the storage 110 and loaded into the microprocessor 108 for example at the startup of the mobile terminal 102. The computer program product 130 sends during the configuration phase of the mobile terminal 102 a first message 132 to the network 100. The first message 132 corresponds to a DHCP Discover message to which first information 118 is added. The first information 118 indicates whether the mobile terminal 102 is able to employ the MIP client 128. The first information 118 in the first message 132 is processed and removed by the DHCP relay 134. The DHCP relay 134 forwards then the first message 132 which corresponds to the DHCP Discover message to the DHCP server 138.

The DHCP server 138 receives the first message and sends in response a second message 142. The second message 142 corresponds to a DHCP OFFER message and comprises first configuration data 146 and a first tag 148. The first tag 148 enables the mobile terminal to identify that the first configuration data 146 has been provided by the remote home network 106. The second message 142 is then transferred via connection 126 to the foreign network 104 where it is received by the DHCP relay 134.

The DHCP relay 134 adds second configuration data 150 to the second message 142. The second configuration data 150 comprise a second tag 152 and second information 140. The second tag 152 enables the mobile terminal 102 to identify the second configuration data 150 as provided by the local foreign network 104, or more specifically by the local DHCP relay 134. The second information 140 indicates the mobility modes supported by the foreign network and optionally whether the mobile station shall instantiate a MIP client. The second message 142 is then transmitted via the connection 124 to the mobile terminal 142.

After reception of the second message 142, the mobile terminal 102 can store the first and second configuration data 146, 150 along with the first and second tags 148, 152, e.g., on the storage 110. The mobile station 102 is able to determine whether the configuration data 146, 150 is provided by the DHCP server 138 or the DHCP relay 134 by use of the first or second tag 148, 152, respectively.

Further, the mobile terminal 102 extracts the second information 140 from the second message 142. If the second information 140 only informs the mobile terminal which mobility modes are supported by the foreign network 104, the mobile terminal can instantiate the MIP client 128 and therefore decide that communication shall be hold between the network 100 and the mobile terminal by use of the MIP client 128 served by the home agent 144 which acts as a MIP server for the MIP client 128. If the mobile terminal 102 decides not to use the MIP client 128, a MIP client 112 is started on the network which is also served by the home agent 144.

The second information 140 can optionally also instruct the mobile terminal 102 whether or not to use the MIP client 128. Hence, the DHCP relay 134 on the network side decides whether the communication with the mobile terminal will take place via the proxy MIP client 112 or via the MIP client 128.

After the mobile terminal 102 has been configured, the mobile terminal 102 is served by the home agent 144 and by the foreign agent 136 in accordance with mobile IP, whereby either the MIP client 128 is used to serve the mobile station 102 or alternatively the proxy MIP 112 instantiated and run on the foreign network 104 is used for serving the mobile station 102 depending on the indication in the second message whether or not the mobile station shall employ the MIP client 128.

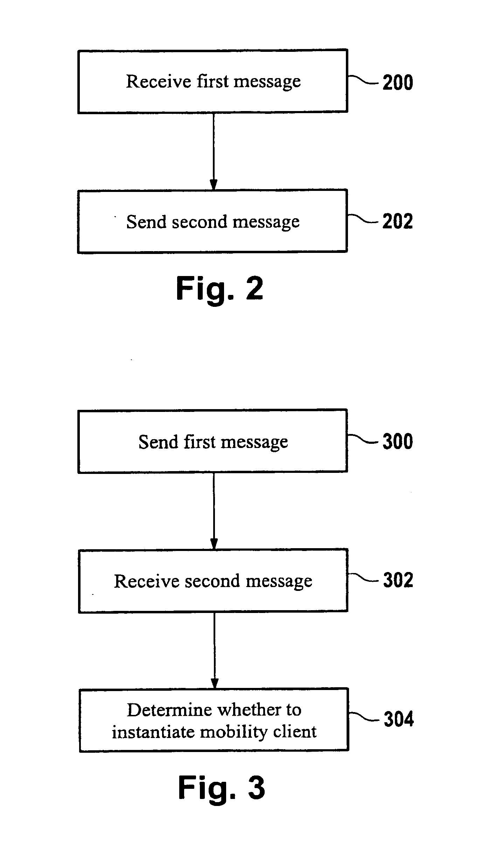

Fig. 2 shows a flow diagram illustrating basic steps performed by a method in according with the invention. In step 200, a first message is received from the mobile terminal at the IP network. The first message indicates the ability of the mobile terminal to employ an IP-based mobility client. In step 202, a second message is sent to the mobile terminal. The mobile terminal indicates the mobility modes supported by the IP network.

Fig. 3 shows a flow diagram which illustrates basic step performed by a method of configuring a connection of a mobile terminal to an IP network. In step 300, a first message is sent from the mobile terminal to the IP network. The first message indicates the ability of the mobile terminal to employ an IP based mobility protocol client for the connection. In step 302, a second message is received from the IP network in response to the first message. The second message indicates the mobility modes supported by the IP network. In step 304, the mobile terminal determines whether to instantiate the mobility protocol client on the mobile terminal, if the second message indicates that the IP network supports the mobility protocol client in the mobile terminal.

### List of Reference Numerals

| | |
|---|---|
| 100 | IP network |
| 102 | Mobile terminal |
| 104 | Foreign network |
| 106 | Home network |
| 108 | Microprocessor |
| 110 | Storage |
| 112 | MIP client |
| 116 | Router |
| 118 | First information |
| 120 | Storage |
| 122 | Router |
| 124 | Connection |
| 126 | Connection |
| 128 | MIP client |
| 130 | Computer program product |
| 132 | First message |
| 134 | DHCP relay |
| 136 | Foreign agent |
| 138 | DHCP server |
| 140 | Second information |
| 142 | Second message |
| 144 | Home agent |
| 146 | First configuration data |
| 148 | First tag |
| 150 | Second configuration data |
| 152 | Second tag |

## Claims

1. A method of configuring a connection of a mobile terminal (102) to an internet protocol, network (100), said method comprising:
- receiving a first message (132) from the mobile terminal, said first message indicating whether the mobile terminal is able to employ an IP based mobility protocol client (128) for said connection;
- sending a second message (142) to the mobile terminal, wherein said second message indicates the mobility modes supported by the IP network, wherein the mobility modes refer to the usage of a proxy mobility protocol client on the network or to the usage of the mobility protocol client on the mobile terminal, wherein the second message (142) further indicates to the mobile terminal whether the mobile terminal shall employ the mobility protocol client for the connection (124), if the ability to use the mobility protocol client is indicated in the first message,
- instantiating a mobility server on the IP network (100) for the connection,
- instantiating the proxy mobility protocol client on the network (100), if indicated by said second message that the mobile terminal shall not use the mobility protocol client, said proxy mobility protocol client linking the mobile terminal to said mobility server.

2. The method of claim 1, wherein the network comprises a home network and a foreign network, wherein the mobile terminal is associated with the home network, wherein the mobile terminal is linked to the home network via the foreign network, wherein the home network or the foreign network comprises a DHCP server, wherein the foreign network comprises a DHCP relay, wherein the second message is sent from the DHCP server via the DHCP relay to the mobile terminal, and wherein first configuration data is comprised in said second message, wherein the first configuration data comprises a first tag, wherein the first tag indicates that the first configuration data has been provided by the DHCP server, wherein the DHCP relay adds second configuration data to the second message, wherein the second configuration data comprises a second tag, wherein the second tag indicates that the second configuration data has been provided by the DHCP relay, and wherein first configuration data is obtained from an AAA, authentication, authorization and accounting, server via the AAA-protocol, when the DHCP server is located in the foreign network, and wherein the second data comprises information about the mobility modes supported by the IP network and an instruction for the mobile terminal to use or not to use the mobility client.

3. A computer program product comprising computer executable instructions, said instructions being adapted to perform the method in accordance with any one of the preceding claims.

4. A network component (134, 138) of an internet protocol, network (100), said network component comprising:
- means for receiving a first message (132) from a mobile terminal (102), said first message indicating whether the mobile terminal is adapted to employ an IP-based mobility protocol client (128) for a connection to the internet protocol network;
- means for sending a second message (142) to the mobile terminal, said second message indicating the mobility modes supported by the network and whether the mobile terminal shall employ the mobility protocol client (128) for the connection if indicated by the first message, wherein the mobility modes refer to the usage of a proxy mobility protocol client on the network or to the usage of the mobility protocol client on the mobile terminal,
- means for instantiating a mobility server on the IP network (100) for the connection;
- means for instantiating the proxy mobility protocol client on the network (100), if indicated in said second message that the mobile terminal shall not use the mobility protocol client, said proxy mobility protocol client linking said mobile terminal to said mobility server.

## Patentansprüche

1. Ein Verfahren zum Konfigurieren einer Verbindung eines Mobilendgeräts (102) zu einem Internet-Protokoll, IP-Netzwerk (100), wobei das besagte Verfahren umfasst:
- Empfangen einer ersten Nachricht (132) vom Mobilendgerät, wobei die besagte erste Nachricht angibt, ob das Mobilendgerät fähig ist, einen IP-basierten Mobilitätsprotokoll-Client (128) für die besagte Verbindung zu benutzen;
- Senden einer zweiten Nachricht (142) an das Mobilendgerät, wobei die besagte zweite Nachricht die vom IP-Netzwerk unterstützten Mobilitätsmodi angibt, wobei sich die Mobilitätsmodi auf die Verwendung eines Mobilitätsprotokoll-Proxy-Client auf dem Netzwerk oder auf die Verwendung des Mobilitätsprotokoll-Client auf dem Mobilendgerät beziehen, wobei die zweite Nachricht (142) weiterhin dem Mobilendgerät mitteilt, ob das Mobilendgerät den Mobilitätsprotokoll-Client für die Verbindung (124) benutzen soll, wenn die Fähigkeit, den Mobilitätsprotokoll-Client zu benutzen, in der ersten Nachricht angegeben wurde.
- Instanziieren eines Mobilitätsservers auf dem IP-Netzwerk (100) für die Verbindung,
- Instanziieren des Mobilitätsprotokoll-Proxy-Client auf dem Netzwerk (100), wenn in der besagten zweiten Nachricht angegeben wird, dass das Mobilendgerät den Mobilitätsprotokoll-Client nicht benutzen soll, wobei der besagte Mobilitätsprotokoll-Proxy-Client das Mobilendgerät mit dem besagten Mobilitätsserver verlinkt.

2. Das Verfahren nach Anspruch 1, wobei das Netzwerk ein Hausnetz und ein Fremdnetz umfasst, wobei das Mobilendgerät mit dem Hausnetz assoziiert ist, wobei das Mobilendgerät über das Fremdnetz mit dem Hausnetz verlinkt ist, wobei das Hausnetz oder das Fremdnetz einen DHCP-Server umfasst, wobei des Fremdnetz ein DHCP-Relais umfasst, wobei die zweite Nachricht vom DHCP-Server über das DHCP-Relais an das Mobilendgerät gesendet wird, und wobei die ersten Konfigurationsdaten in der besagten zweiten Nachricht enthalten sind, wobei die ersten Konfigurationsdaten einen ersten Tag enthalten, wobei der erste Tag angibt, dass die ersten Konfigurationsdaten vom DHCP-Server bereitgestellt wurden, wobei das DHCP-Relais der zweiten Nachricht zweite Konfigurationsdaten hinzufügt, wobei die zweiten Konfigurationsdaten einen zweiten Tag umfassen, wobei der zweite Tag angibt, dass die zweiten Konfigurationsdaten vom DHCP-Relais bereitgestellt worden sind, und wobei die ersten Konfigurationsdaten von einem AAA, Authentifizierungs-, Autorisierungs- und Abrechnungsserver über das AAA-Protokoll erhalten werden, wenn der DHCP-Server im Fremdnetz angeordnet ist, und wobei die zweiten Daten Informationen über die vom IP-Netzwerk unterstützten Mobilitätsmodi sowie eine Anweisung für das Mobilendgerät enthalten, um dem Mobilendgerät mitteilzuteilen, ob es den Mobilitäts-Client benutzen soll oder nicht.

3. Ein Computerprogramm, umfassend computerausführbare Anweisungen, wobei die besagten Anweisungen dazu bestimmt sind, das Verfahren gemäß einem beliebigen der vorstehenden Ansprüche auszuführen.

4. Eine Netzwerkkomponente (134, 138) eines Internet-Protokoll, IP-Netzwerks (100), wobei die besagte Netzwerkkomponente umfasst:
- Mittel zum Empfangen einer ersten Nachricht (132) von einem Mobilendgerät (102), wobei die besagte erste Nachricht angibt, ob das Mobilendgerät fähig ist, einen IP-basierten Mobilitätsprotokoll-Client (128) für eine Verbindung zum Internet-Protokoll-Netzwerk zu benutzen;
- Mittel zum Senden einer zweiten Nachricht (142) an das Mobilendgerät, wobei die besagte zweite Nachricht die vom Netzwerk unterstützten Mobilitätsmodi angibt und mitteilt, ob das Mobilendgerät den Mobilitätsprotokoll-Client (128) für die Verbindung benutzen soll, wenn dies in der ersten Nachricht angegeben wurde, wobei sich die Mobilitätsmodi auf die Verwendung eines Mobilitätsprotokoll-Proxy-Client auf dem Netzwerk oder auf die Verwendung des Mobilitätsprotokoll-Client auf dem Mobilendgerät beziehen;
- Mittel zum Instanziieren eines Mobilitätsservers auf dem IP-Netzwerk (100) für die Verbindung;
- Mittel zum Instanziieren des Mobilitätsprotokoll-Proxy-Client auf dem Netzwerk (100), wenn in der besagten zweiten Nachricht angegeben wird, dass das Mobilendgerät den Mobilitätsprotokoll-Client nicht benutzen soll, wobei der besagte Mobilitätsprotokoll-Proxy-Client das besagte Mobilendgerät mit dem besagten Mobilitätsserver verlinkt.

## Revendications

1. Procédé de configuration d'une connexion d'un terminal mobile (102) à un réseau (100) de protocole internet, P, ledit procédé comprenant :
- la réception d'un premier message (132) en provenance du terminal mobile, ledit premier message indiquant si le terminal mobile est capable d'utiliser un protocole de mobilité client basé sur IP (128) pour ladite connexion ;
- l'envoi d'un second message (142) au terminal mobile, dans lequel ledit second message indique les modes de mobilité pris en charge par le réseau IP, dans lequel les modeste mobilité se réfèrent à l'usage d'un protocole de mobilité client proxy sur le réseau ou à l'usage du protocole de mobilité client sur le terminal mobile, dans lequel le second message (142) indique en outre au terminal mobile si le terminal mobile va utiliser le protocole de mobilité client pour la connexion (124), si la capacité à utiliser le protocole de mobilité client est indiquée dans le premier message,
- l'instanciation d'un serveur de mobilité sur le réseau IP (100) pour la connexion,
- l'instanciation du protocole de mobilité client proxy sur le réseau (100), si ledit second message indique que le terminal mobile ne va pas utiliser le protocole de mobilité client, ledit protocole de mobilité client proxy reliant le terminal mobile audit serveur de mobilité.

2. Procédé selon la revendication 1, dans lequel le réseau comprend un réseau domestique et un réseau étranger, dans lequel le terminal mobile est associé au réseau domestique, dans lequel le terminal mobile est relié au réseau domestique via le réseau étranger, dans lequel le réseau domestique ou le réseau étranger comprend un serveur DHCP, dans lequel le réseau étranger comprend un relais DHCP, dans lequel le second message est envoyé depuis le serveur DHCP via le relais DHCP au terminal mobile, et dans lequel des premières données de configuration sont comprises dans ledit second message, dans lequel les premières données de configuration comprennent une première balise, dans lequel la première balise indique que les premières données de configuration ont été fournies par le serveur DHCP, dans lequel le relais DHCP ajoute des secondes données de configuration au second message, dans lequel les secondes données de configuration comprennent une seconde balise, dans lequel la seconde balise indique que les secondes données de configuration ont été fournies par le relais DHCP, et dans lequel les premières données de configuration sont obtenues depuis un serveur AAA, d'authentification, d'autorisation et de compte via le protocole AAA, lorsque le serveur DHCP est situé dans le réseau étranger et dans lequel les secondes données comprennent des informations sur les modes de mobilité pris en charge par le réseau IP et une instruction pour le terminal mobile d'utiliser ou de ne pas utiliser le client de mobilité.

3. Produit de programme informatique comprenant des instructions exécutables par ordinateur, lesdites instructions étant adaptées pour exécuter le procédé selon l'une quelconque des revendications précédentes.

4. Composant de réseau (134, 138) d'un réseau (100) de protocole internet, P, ledit composant de réseau comprenant :
- moyens pour recevoir un premier message (132) en provenance d'un terminal mobile (102), ledit premier message indiquant si le terminal mobile est adapté pour utiliser un protocole de mobilité client basé sur IP (128) pour une connexion au réseau IP ;
- moyens pour envoyer un second message (142) au terminal mobile, ledit second message indiquant les modes de mobilité pris en charge par le réseau et si le terminal mobile va utiliser le protocole de mobilité client (128) pour la connexion si le premier message l'indique, dans lequel les modes de mobilité se réfèrent à l'usage d'un protocole de mobilité client proxy sur le réseau ou à l'usage du protocole de mobilité client sur le terminal mobile,
- moyens pour l'instanciation d'un serveur de mobilité sur le réseau IP (100) pour la connexion,
- moyens pour l'instanciation du protocole de mobilité client proxy sur le réseau (100), si ledit second message indique que le terminal mobile ne va pas utiliser le protocole de mobilité client, ledit protocole de mobilité client reliant le terminal mobile audit serveur de mobilité.
